# EUROPÄISCHE PATENTANMELDUNG

(11) **EP 2 068 185 A1**
(43) Veröffentlichungstag der Anmeldung: **10.06.2009**
(21) Anmeldenummer: 07122441.4
(22) Anmeldetag: 06.12.2007
(51) Int. Cl.: G02B 6/44

(54) **Anschlussdose für Lichtwellenleiter**

(71) Anmelder: Diamond Gmbh, 70771 Leinfelden-Echterdingen (DE)
(72) Erfinder: Raab, Christoph Dr., 70199 Stuttgart (DE); Marrene, Massimiliano, 73265 Dehingen (DE)
(74) Vertreter: Wenger, René

(57) **Zusammenfassung**

Eine Anschlussdose für Lichtwellenleiter weist ein Einbaugehäuse (3), eine Montageplatte (1), und eine an die Montageanordnung befestigte oder befestigbare Abdeckung (6) auf. Auf der Oberseite Montageplatte (1) sind deren Mittel (11,12,13) zur Aufnahme und/oder zum Fixieren von Überlängen des Lichtwellenleiterkabels (10) und von Spleissen angeordnet. An der Unterseite der Montageplatte (1) ist ein in das Einbaugehäuse (3) hineinragendes, becherförmiges Innengehäuse (2) angebracht, wobei das Innere des Innengehäuses (2) einen Aufnahmeraum für elektrische, elektronische, optische und/oder optoelektronische Komponenten bildet. Die Abdeckung (6) weist einen Eingang (16) zum Anschliessen der Lichtwellenleiter auf, wobei der Eingang durch ein zwischen einer Schliesstellung und einer Offenstellung bewegbares und insbesondere schwenkbares Deckelteil (7) versperrbar ist.

## Beschreibung

Die Erfindung betrifft eine Anschlussdose für Lichtwellenleiter gemäss dem Oberbegriff von Anspruch 1. Die Anschlussdose eignet sich insbesondere als Endteilnehmer-Anschlussdose für sogenannte "Fiber to the Home"(FTTH)-Netzwerke. Derartige Anschlussdosen werden oder sind in Wandöffnungen eingebaut. Anstatt dem direkten Einbau in eine Wand ist auch ein indirekter Einbau möglich, hierzu können handelsübliche oder spezielle Aufputz- oder Unterputzdosen verwendet werden.

Anschlussdosen für optische Verbindungen sind seit längerer Zeit bekannt und gebräuchlich. Aus der EP 1 455 209 A1 ist eine gattungsmässig vergleichbare Anschlussdose mit einem becherförmigen Einbaugehäuse bekannt geworden, an dessen Vorderseite in einer Montageanordnung Steckerbuchsen in Duplexausführung gehalten sind. Den Abschluss der Vorderseite bildet eine Abdeckhaube. Die an die Anschlussdose herangeführten Lichtwellenleiterkabel sind über eine seitliche Öffnung im Einbaugehäuse an die Anschlussdose herangeführt und werden mit einem grossen Biegeradius zu den Steckerbuchsen geführt. In der Praxis hat sich gezeigt, dass diese Anschlussdose für FTTH-Anwendung wenig geeignet ist. Der Umgang mit der Anschlussdose ist insbesondere hinsichtlich Handhabung nach der Installation relativ schwierig. Weiterhin ist eine flexible Bestückung mit Bauteilen zur Herstellung optischer Steckverbindungen sowie allenfalls weiterer Komponenten kaum möglich.

Ähnliche Probleme ergeben sich auch bei der Verwendung von Anschlussdosen, wie sie beispielsweise in der DE 297 11 850 U1 beschrieben sind. Das Dokument selbst betrifft eine Anschlussdose mit einem doppelwandigen Einbaugehäuse aus einer Einbaudose und einem in dieses hineinragendes topfförmiges Teil.

Es ist daher eine Aufgabe der Erfindung, die Nachteile des Bekannten zu vermeiden, insbesondere eine Anschlussdose der eingangs genannten Art zu schaffen, die einfach handhabbar ist und sich durch einen breiten Anwendungsbereich auszeichnet. Insbesondere soll sie für den Aufbau von FTTH-Netzwerken geeignet sein. Diese Aufgabe wird mit einer Anschlussdose gelöst, die die Merkmale von Anspruch 1 aufweist.

Durch die Verwendung einer Montageplatte, auf deren Oberseite Mittel zur Aufnahme und/oder zum Fixieren von Überlängen des Lichtwellenleiters und gegebenenfalls von wenigstens einem Spleiss angeordnet sind, ist ein breiter Einsatzbereich gegeben. Je nach Bedarf kann der Lichtwellenleiter mit unterschiedlichen Komponenten, beispielsweise Steckerteile, konfektioniert werden. Alternativ oder eventuell zusätzlich ist es auch denkbar, beispielsweise unter Verwendung einer "Fusion-Technologie" die Lichtwellenleiter des Übertragungssystems direkt miteinander zu verbinden. Die Überlängen können beispielsweise in Form von Schlaufen abgelegt sein. Die Mittel zur Aufnahme und/oder zum Fixieren der Überlängen stellen eine geordnete und zugleich platzsparende Ablage der Überlängen des Lichtwellenleiterkabels sicher. Diese Aufnahmemittel können auf einer durch die Oberseite der Montageplatte vorgegebenen Ebene angeordnet sein.

Die Montageplatte kann die offene Oberseite des Einbaugehäuses verschliessen. Die Montageplatte kann lösbar an der Vorderseite des Einbaugehäuses, welche beispielsweise durch einen Flanschabschnitt gebildet ist, befestigt oder befestigbar sein. Besonders vorteilhaft ist es, wenn ebenfalls (oder alternativ) die Abdeckung lösbar an der Montageplatte befestigbar oder befestigt ist.

In einer ersten Ausführungsform kann die Montageplatte einstückig ausgebildet sein und die offene Vorderseite des Einbaugehäuses abdecken. Derartige Montageplatten können aus Kunststoff bestehen und mittels Spritzgiess-Verfahren einfach hergestellt werden.

Vorteilhaft kann es sein, wenn auf der Oberseite der Montageplatte Haltemittel zur Aufnahme einer optischen Steckverbindung angeordnet sind. In diese Steckverbindungs-Anordnung kann beispielsweise wenigstens ein Steckerteil über einen Eingang in der Abdeckung zum Herstellen einer optischen Steckverbindung eines rückseitig an die Anschlussdose herangeführten Lichtwellenleiterkabels eingesteckt werden.

Besonders vorteilhaft kann es sein, wenn die Steckverbindungsanordnung ein Buchsenteil ist, das in einer vormontierten Position auf der Montageplatte gehalten ist, wobei von beiden Seiten je wenigstens ein Steckerteil in das Buchsenteil einsteckbar ist. Dabei kann eines der Steckerteile ein kabelseitiges Steckerteil sein, das am freien Ende der Überlänge des Lichtwellenleiterkabels angebracht oder anbringbar ist. Das Buchsenteil kann lösbar oder fest mittels der Haltemittel mit der Anschlussdose verbunden sein. Selbstverständlich ist es aber auch denkbar, anstatt eines kabelseitigen bzw. rückseitigen Steckerteils das Lichtwellenleiterkabel direkt an das Buchsenteil anzuschliessen, womit nur ein, d.h. das vorderseitige Steckerteil in das Buchsenteil einzustecken wäre.

Weiterhin kann es vorteilhaft sein, wenn die Mittel zur Aufnahme und/oder zum Fixieren von Überlängen des Lichtwellenleiters Halteelemente enthalten, durch die vorzugsweise mehrere Lichtwellenleiter durchführbar sind und/oder dass die Mittel Leitprofile enthalten, die den Rand der Montageplatte wenigstens teilweise begrenzen. An diesen Leitprofilen können die Lichtwellenleiterkabel entlang geführt werden. Die entsprechenden Halteelemente können vorteilhaft integrierender Bestandteil des Leitprofils sein, wobei sie beispielsweise als gegenüber einer Führungsfläche des Leitprofils wegragende, an diesem angeformte Vorsprünge ausgebildet sein können.

Das Leitprofil kann den Rand der Montageplatte vollständig begrenzen, wobei zum Festlegen eines Eingangsbereichs das eine Ende des Leitprofils gegenüber dem anderen Ende des Leitprofils nach innen versetzt angeordnet sein kann. Die beiden Enden des Leitprofils können parallel zueinander verlaufen. Zwischen diesen Enden des Leitprofils kann die vorgängig erwähnte Steckverbindungs-Anordnung, insbesondere das Buchsenteil eingesetzt oder einsetzbar sein.

Das Einbaugehäuse kann becherförmig ausgebildet sein, wobei es einen Bodenabschnitt, an diesen anschliessende, vorzugsweise einen Hohlzylinder oder einen Hohlkonus bildende Seitenwände und einen Flanschabschnitt aufweist, wobei der Flanschabschnitt die Vorderseite des Einbaugehäuses festlegt.

Im Bodenabschnitt und/oder in den Seitenwänden, insbesondere im Bereich der Bodenkante zwischen Bodenabschnitt und den Seitenwänden, kann eine oder mehrere Durchgangsöffnungen angeordnet sein, durch welche rückseitig herangeführte Lichtwellenleiterkabel in das Einbaugehäuse einführbar sind. Wenn mehrere Durchgangsöffnungen vorgesehen sind, kann es vorteilhaft sein, wenn diese unterschiedlich dimensioniert sind.

An der der Oberseite gegenüberliegenden Unterseite der Montageplatte kann ein in das Einbaugehäuse hineinragendes, becherförmiges Innengehäuse vorzugsweise lösbar angebracht oder anbringbar sein. Dabei kann das Innere des als Hohlkörper ausgebildeten Innengehäuses einen Aufnahmeraum für elektrische, elektronische, optische und/oder opto-elektronische Komponenten bilden.

Vorteilhaft kann es sein, wenn die Aussenkonfiguration des Innengehäuses wenigstens in Bezug auf die Seitenwände etwa komplementär zur Innenkonfiguration des Einbaugehäuses ausgebildet ist. Dabei kann das Innengehäuse bevorzugt mit leichtem Spiel nahezu passgenau im Einbaugehäuse einfügbar sein.

Die Seitenwand des Innengehäuses kann in einem Umfangsabschnitt derart nach innen versetzt angeordnet sein, dass zwischen dem Innengehäuse und dem Einbaugehäuse ein kanalartiger Hohlraum zum Durchführen von Lichtwellenleiterkabeln gebildet wird. Somit müssen die rückseitig herangeführten Lichtwellenleiterkabel nicht durch das Innengehäuse geführt werden.

Auf der Aussenseite der in einem Umfangsabschnitt nach innen versetzten Seitenwand und/oder auf der gegenüberliegenden Innenseite des Einbaugehäuses können Mittel zur Aufnahme und/oder zum Fixieren von Lichtwellenleiterkabeln, insbesondere Halteelemente angeordnet sein. Diese Halteelemente können als etwa L-förmige Haken ausgebildet sein, durch die das oder die Kabel durchführbar sind.

Die Abdeckung kann einen Eingang zum Anschliessen der Lichtwellenleiter aufweisen, wobei der Eingang durch ein zwischen einer Schliessstellung und einer Offenstellung bewegbares und insbesondere schwenkbares Deckenteil versperrbar ist. Mit einer solchen Anordnung ist ein optimaler Schutz der staub- und schmutzempfindlichen Lichtwellenleiter in der Anschlussdose gewährleistet.

Die Schutzwirkung lässt sich weiter erhöhen, wenn am Deckelteil und/oder auf der Oberseite der Montageplatte ein elastisches Dichtelement als Staubschutz angebracht ist. Das Dichtelement kann insbesondere ein Schaumstoffteil sein.

Die Abdeckung kann in einer Draufsicht etwa rechteckig ausgebildet sein und der Eingang kann in einem Eckbereich der Abdeckung angeordnet sein. Eine derartige Ausgestaltung stellt eine optimale Ausnutzung des Platzes für die Überlängen und allfälligen Spleisse auf der Montageplatte sicher.

Weiter Vorteile und Einzelmerkmale der Erfindung ergeben sich aus den Zeichnungen und aus der nachfolgenden Beschreibung eines Ausführungsbeispiels. Es zeigen:
- Figur 1:: eine perspektivische Darstellung einer erfindungsgemässen Anschlussdose,
- Figur 2:: eine Seitenansicht auf die Anschlussdose gemäss Figur 1,
- Figur 3:: eine Explosionsdarstellung der Anschlussdose gemäss Figur 1 mit einem rückseitig an diese herangeführten Lichtwellenleiterkabel und einem Steckerteil zum vorderseitigen Anschliessen an die Anschlussdose,
- Figur 4:: einen Querschnitt durch die Anschlussdose (Schnitt A-A gemäss Fig. 2),
- Figur 5:: eine Abdeckung für die Anschlussdose mit einem demontierten Deckelteil,

- Figur 6:: eine perspektivische Darstellung eines Einbaugehäuses für die Anschlussdose,
- Figur 7:: eine Draufsicht auf das Einbaugehäuse gemäss Figur 6,
- Figur 8:: eine Seitenansicht des Einbaugehäuses,
- Figur 9:: einen Querschnitt durch das Einbaugehäuse (Schnitt B-B gemäss Fig. 8),
- Figur 10:: eine perspektivische Darstellung eines Innengehäuses für die Anschlussdose,
- Figur 11:: eine Draufsicht auf das Innengehäuse gemäss Figur 10,
- Figur 12:: eine perspektivische Darstellung einer Montageplatte, und
- Figur 13:: eine Draufsicht auf die Oberseite der Montageplatte gemäss Figur 21.

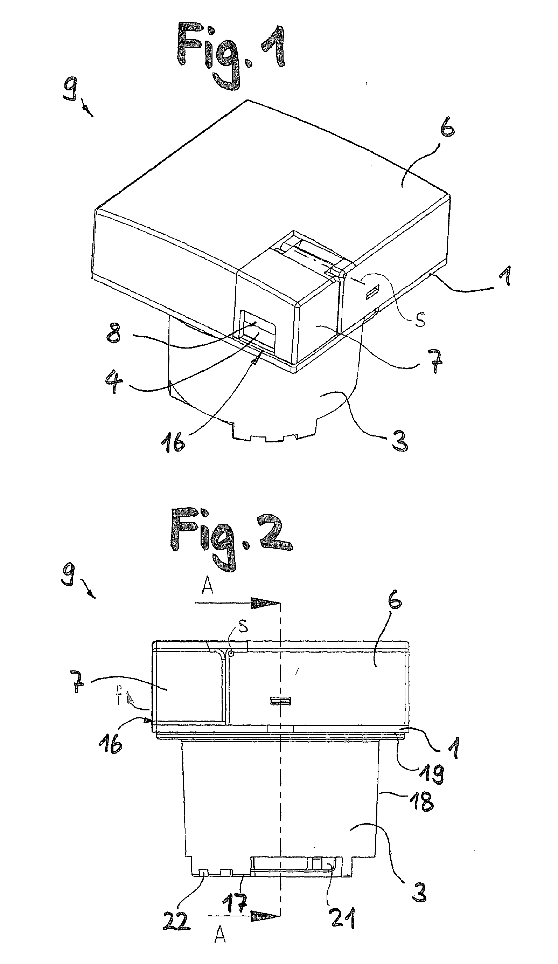

Figur 1 zeigt eine mit 9 bezeichnete Anschlussdose. Diese enthält ein Einbaugehäuse 3 das in eine (nicht gezeigte) Wandöffnung, eine Aufputz- oder eine Unterputzdose einbaubar ist. Mit 1 ist eine Montageplatte bezeichnet, deren Oberseite hier durch eine Abdeckung 6 verdeckt ist. Die in einer Draufsicht rechteckige Abdeckung 6 weist in einem Eckbereich eine schwenkbar an dieser gelagertes Deckelteil 7 auf (Schwenkachse S). Ersichtlicherweise weist das Deckelteil 7 in einem Stirnwandabschnitt eine Aussparung auf, die den Eingang 16 bildet. Dieser Eingang 16 ist in Schliessstellung jedoch durch zwei aufeinander liegende, elastisch verformbare Schaumstoffteile 4 und 8 verschlossen.

In der Seitenansicht gemäss Figur 2 ist mit dem Pfeil f die Öffnungsrichtung für die Schwenkbewegung des Deckelteils 7 angedeutet. Weiterhin geht aus dieser Darstellung hervor, dass im Bereich der Bodenkante zwischen einem Bodenabschnitt 17 und den Seitenwänden 18 des Einbaugehäuses 3 mehrere Durchgangsöffnungen 21 und 22 angeordnet sind, durch welche rückseitig herangeführte (nicht gezeigte) Lichtwellenleiterkabel in das Einbaugehäuse einführ- und durchführbar sind. Die Anschlussdose 9 eignet sich vor allem für FTTH-Anwendungen. Als "Fiber to the Home" (abgekürzt: "FTTH") bezeichnet man in der Telekommunikation das Verlegen von Lichtwellenleitern bis in die Wohnung eines Endkonsumenten. Selbstverständlich eignet sich die Anschlussdose auch für andere Anwendungsgebiete, die z.B. unter den Abkürzungen FTTL, FTTC, FTTN oder FTTB bekannt sind.

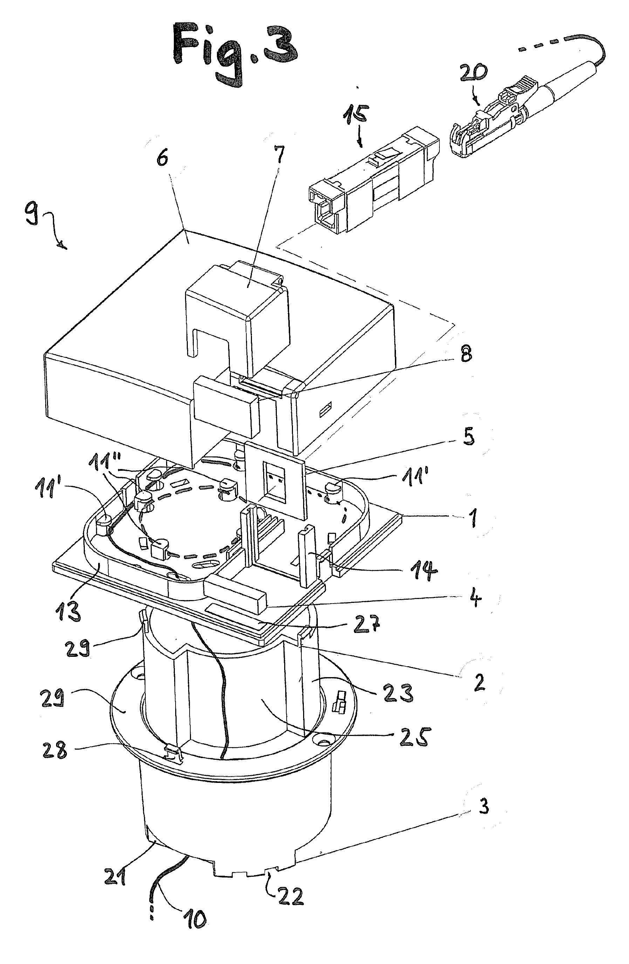

Den genauen Aufbau der Anschlussdose zeigt die Explosionsdarstellung der Figur 3. Hier sind Lichtwellenleiter 10 erkennbar, die rückseitig an die Anschlussdose 9 herangeführt werden. Das Kabel 10 kann auf der Oberseite der Montageplatte 1 in Schlaufen oder Wicklungen (angedeutet durch strichlierte Linien) abgelegt sein. Die Kabel können mittels Halteelementen 11 zur Aufnahme und zum Fixieren der Überlängen gesichert sein. Mit 11' und 11" sind äussere und innere Halteelemente bezeichnet, wobei die äusseren Halteelemente 11' in (nachfolgend noch näher beschriebenen) Leitprofilen 13 integriert sind. Mittels der Haltemittel 5 und 14 ist ein Buchsenteil 15 aufnehmbar, in das von beiden Seiten her Steckerteile einsteckbar sind. Ein solches Steckerteil 20 ist in Figur 3 ebenfalls erkennbar. Die Einsteckrichtung verläuft parallel zur Oberseite der Montageplatte. Das mit dem Lichtwellenleiter 10 verbundene Steckerteil kann beispielsweise mit einem unter der Bezeichnung "E-2000™ Fusion" bekannten Steckerteil unter Verwendung eines Spleiss-Verfahrens konfektioniert sein. Ein derartiges Steckerteil und ein entsprechendes Verfahren zum Anbringen dieses Steckerteils an einen Lichtwellenleiter (i.c. der Kabelpeitsche) ist in der WO 2004/001471 beschrieben. Das Buchsenteil 15 kann in den korrespondierenden Steckerrahmen 5 eingesetzt werden, der seinerseits von oben her ersichtlicherweise in die schienenförmigen Haltemittel 14 einschiebbar ist. Selbstverständlich wäre es alternativ auch denkbar, beispielsweise unter Verwendung einer "Fusion-Technologie" die Lichtwellenleiter des Übertragungssystems direkt miteinander zu verbinden. Eine solche spezielle Montageplatte erlaubt ersichtlicherweise ein Leitungsmanagement.

Weiterhin sind aus Figur 3 die elastisch verformbaren Schaumstoffteile 4 und 8 deutlich erkennbar. Das Schaumstoffteil 4 kann im Bereich der Kontaktfläche 27 auf die Oberseite der Montagefläche geklebt werden. Das dem Deckelteil 7 zugeordnete Schaumstoffteil 8 wird hingegen innenseitig an das Deckelteil geklebt. Sodann ist noch ein Innengehäuse 2 erkennbar, das nahezu passgenau in das Einbaugehäuse 3 einführbar ist. Das Innere des Innengehäuses 2 bildet einen Aufnahmeraum für elektrische, elektronische, optische und/oder optoelektronische Komponenten. Sowohl das Innengehäuse 2 als auch das Einbaugehäuse 3 ist lösbar an die Montageplatte 1 befestigbar. Für die lösbare Verbindung dienen Rastklinken 28 und 29, die von der Rückseite her in entsprechende Aussparungen in der Montageplatte zum Herstellen einer Rastverbindung einführbar sind. Auf einem Flanschabschnitt 29 sind - neben den Rastklinken 28 weiterhin Löcher für Befestigungsschreiben für den Einbau in beispielsweise eine Wandöffnung angeordnet.

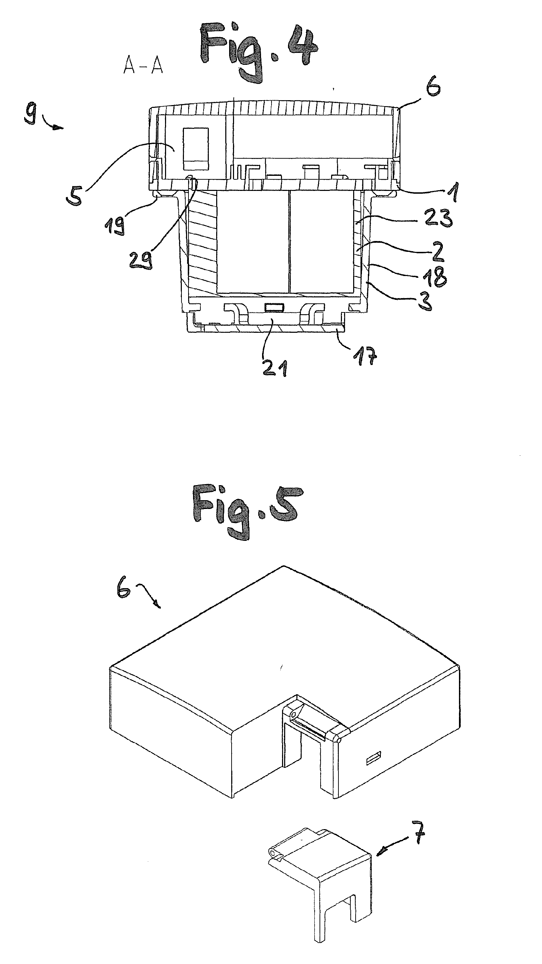

Aus Figur 4 ist erkennbar, dass die Seitenwand 18 des Einbaugehäuses 3 leicht konisch ausgebildet ist. Das becherförmige Innengehäuse 2 ist demgegenüber im Wesentlichen hohlzylindrisch ausgebildet. Ersichtlicherweise ist das in das Einbaugehäuse hineinragende Innengehäuse 2 nahezu passgenau im Einbaugehäuse aufgenommen. Deutlich ist weiterhin aus Figur 4 erkennbar, dass das innere des Innengehäuses 2 einen verhältnismässig grossen Hohlraum bildet, der einen Aufnahmeraum für verschiedene Komponenten bilden kann.

Figur 5 zeigt die Abdeckung 6 sowie das daran schwenkbar befestigbare Deckelteil 7 in einer Einzeldarstellung. Zur besseren Erkennbarkeit ist das Deckelteil 7 um 90° Grad gedreht worden.

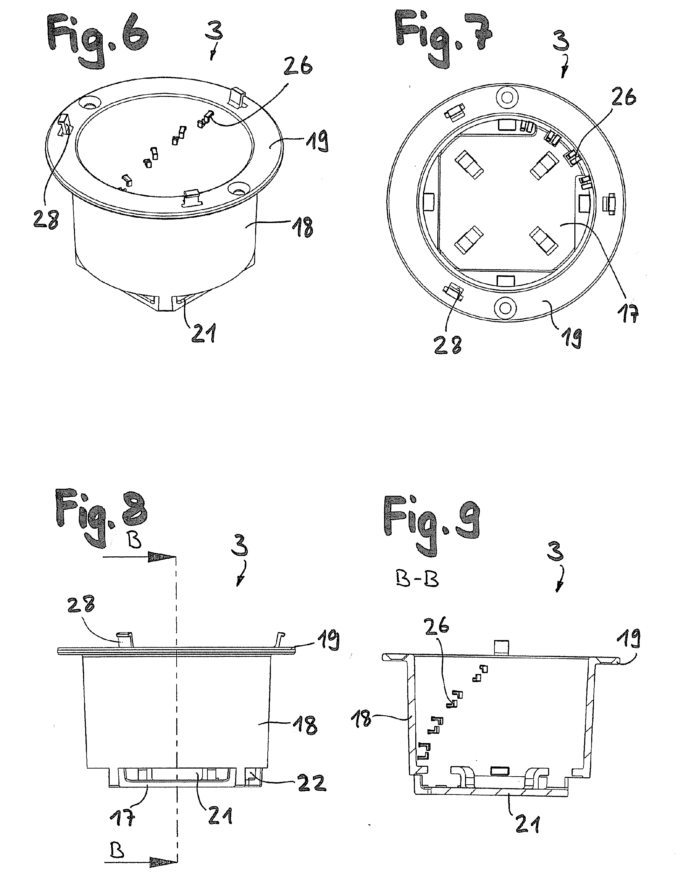

Die Figuren 6 bis 9 zeigen das Einbaugehäuse 3. Dieses wie auch die Abdeckung, die Montageplatte und das Innengehäuse besteht aus Kunststoff und wird vorzugsweise mittels Spritzgiessverfahren hergestellt. An die Mantelseite bzw. Seitenwand 18 schliesst ein Flanschabschnitt 19 an, der die Vorderseite des Einbaugehäuses festlegt. Insbesondere in den Figuren 6 und 9 sind Haltelemente 26 erkennbar, die zum Führen und Fixieren des Lichtwellenleiterkabels dienen. Die Halteelemente sind etwa L-förmige Haken.

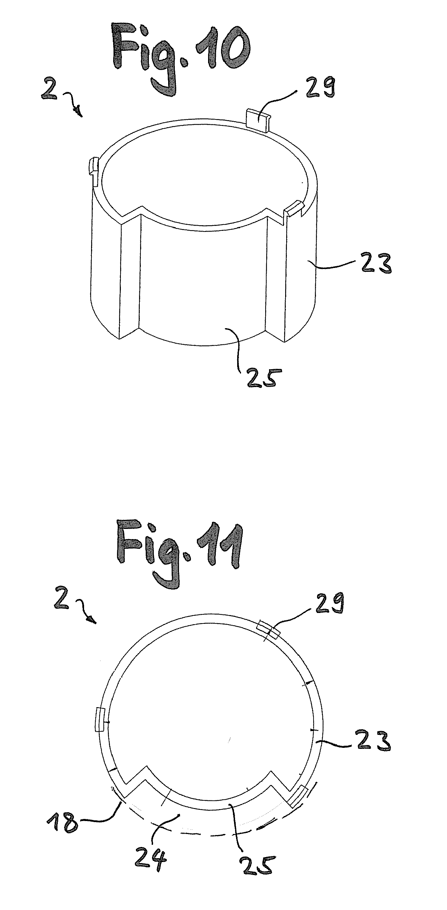

In den Figur 10 und 11 ist das Innengehäuse 2 gezeigt. Das becherförmige Bauteil 2 weist eine zylindrische Seitenwand 23 auf, die in einem Umfangsabschnitt durch eine nach innen versetzte Seitenwand 25 unterbrochen ist. Durch dieses nach innen Versetzen wird ein Hohlraum zum Einbaugehäuse gebildet. In Figur 11 ist dieser kanalartige Hohlraum mit 24 bezeichnet. Mit der strichlierten Linie 18 ist die Innenseite des Einbaugehäuses angedeutet. In Bezug auf die Seitenwände 18, 23 ist die Aussenkonfiguration des Innengehäuses 2 etwa komplementär zur Innenkonfiguration des Einbaugehäuses 3 ausgebildet.

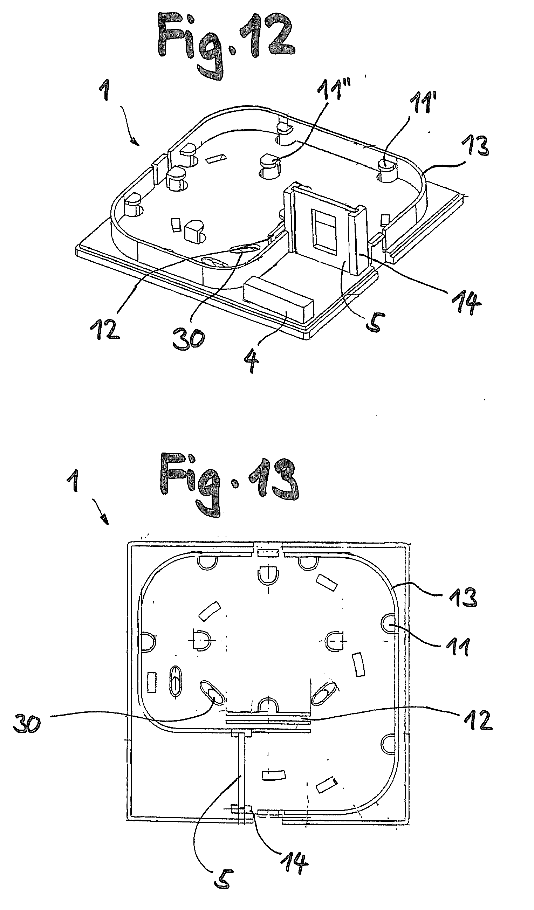

Figur 12 zeigt im Gegensatz etwa zu Figur 3 eine fertig montiere Montageplatte 2 (jedoch ohne Lichtwellenleiterkabel und Steckverbindungs-Anordnungen). Auf der Montageplatte sind drei Kabellöcher 30 angeordnet durch die wahlweise Kabel durchführbar sind. Der genaue Verlauf ist in Figur 13 veranschaulicht. Weiterhin sind hier noch Spleissablagen 12 für Spleisse erkennbar. Das Leitprofil 13 begrenzt den Rand der Montageplatte 1 vollständig, wobei zum Festlegen eines Eingangsbereiches das eine Ende des Leitprofils 13 gegenüber dem anderen Ende nach innen versetzt angeordnet ist. Die beiden Enden des Leitprofils verlaufen parallel zueinander. Zwischen diesen Enden ist das (hier nicht gezeigte) Buchsenteil oder - je nach Bedarf - eine andere Steckverbindungsanordnung eingesetzt.

## Patentansprüche

1. Anschlussdose für Lichtwellenleiter enthaltend
- ein Einbaugehäuse (3), das in eine Wandöffnung, eine Aufputz- oder eine Unterputzdose einbaubar ist, an das wenigstens ein Lichtwellenleiterkabel (10) rückseitig heranführbar ist,
- eine Montageanordnung, die im Bereich einer Vorderseite am Einbaugehäuse (3) befestigt oder befestigbar ist, und
- eine an die Montageanordnung befestigte oder befestigbare Abdeckung (6), **dadurch gekennzeichnet, dass** die Montageanordnung eine Montageplatte (1) ist, auf deren Oberseite Mittel (11,12,13) zur Aufnahme und/oder zum Fixieren von Überlängen des Lichtwellenleiterkabels (10) und gegebenfalls von wenigstens einem Spleiss angeordnet sind.

2. Anschlussdose nach Anspruch 1, **dadurch gekennzeichnet, dass** die Montageplatte (1) einstückig ausgebildet ist und die offene Vorderseite des Einbaugehäuses (3) abdeckt.

3. Anschlussdose nach Anspruch 1 oder 2, **dadurch gekennzeichnet, dass** auf der Oberseite der Montageplatte (1) Haltemittel (5,14) zur Aufnahme einer optischen Steckverbindungsanordnung angeordnet sind, in die wenigstens ein Steckerteil (20) über einen Eingang (16) in der Abdeckung (6) einsteckbar ist.

4. Anschlussdose nach Anspruch 3, **dadurch gekennzeichnet, dass** die Steckverbindungsanordnung ein Buchsenteil (15) ist, das in einer vormontierter Position auf der Montageplatte (1) gehalten ist, wobei von beiden Seiten je wenigstens ein Steckerteil (20) in das Buchsenteil (15) einsteckbar ist, wobei eines der Steckerteile ein kabelseitiges Steckerteil ist, das am freien Ende der Überlänge des Lichtwellenleiterkabels (3) angebracht oder anbringbar ist.

5. Anschlussdose nach einem der Ansprüche 1 bis 4, **dadurch gekennzeichnet, dass** die Mittel zur Aufnahme und/oder zum Fixieren von Überlängen des Lichtwellenleiterkabels (10) Halteelemente (11) enthalten, durch die Lichtwellenleiterkabel durchführbar sind und/oder Leitprofile (13) enthalten, die den Rand der Montageplatte (1) wenigstens teilweise begrenzt.

6. Anschlussdose nach Anspruch 5, **dadurch gekennzeichnet, dass** das Leitprofil (13) den Rand der Montageplatte (1) vollständig begrenzt, wobei zum Festlegen eines Eingangsbereiches das eine Ende des Leitprofils (13) gegenüber dem anderen Ende nach innen versetzt angeordnet ist.

7. Anschlussdose nach einem der Ansprüche 1 bis 6**, dadurch gekennzeichnet, dass** das Einbaugehäuse (3) becherförmig ausgebildet ist, wobei es einen Bodenabschnitt (17), an diesen anschliessende, vorzugsweise einen Hohlzylinder bildende Seitenwände (18) und einen Flanschabschnitt (19) aufweist, wobei der Flanschabschnitt (19) die Vorderseite des Einbaugehäuses (3) festlegt.

8. Anschlussdose nach Anspruch 7, **dadurch gekennzeichnet, dass** im Bodenabschnitt (17) und/oder in den Seitenwänden (18), insbesondere im Bereich der Bodenkante zwischen Bodenabschnitt (17) und den Seitenwänden (18) eine oder mehrere Durchgangsöffnungen (21,22) angeordnet sind, durch welche rückseitig herangeführte Lichtwellenleiterkabel (10) in das Einbaugehäuse (3) einführbar ist.

9. Anschlussdose nach einem der Ansprüche 1 bis 8, **dadurch gekennzeichnet, dass** an der Unterseite der Montageplatte (1) ein in das Einbaugehäuse (3) hineinragendes, becherförmiges Innengehäuse (2) angebracht oder anbringbar ist, wobei das Innere des Innengehäuses (2) einen Aufnahmeraum für elektrische, elektronische, optische und/oder optoelektronische Komponenten bildet.

10. Anschlussdose nach Anspruch 9**, dadurch gekennzeichnet, dass** wenigstens in Bezug auf die Seitenwände (18,23) die Aussenkonfiguration des Innengehäuses (2) etwa komlementär zur Innenkonfiguration des Einbaugehäuses (3) ausgebildet ist.

11. Anschlussdose nach Anspruch 8 oder 9, **dadurch gekennzeichnet, dass** die Seitenwand (23) des Innengehäuses (2) in einem Umfangsabschnitt derart nach innen versetzt angeordnet ist, dass zwischen dem Innengehäuse (2) und dem Einbaugehäuse (3) ein kanalartiger Hohlraum (24) zum Durchführen von Lichtwellenleiterkabeln (10) gebildet wird.

12. Anschlussdose nach Anspruch 11, **dadurch gekennzeichnet, dass** auf der Aussenseite der in einem Umfangsabschnitt nach innen versetzten Seitenwand (25) und/oder auf der gegenüberliegenden Innenseite des Einbaugehäuses (3) Mittel zur Aufnahme und/oder zum Fixieren von Lichtwellenleiterkabeln (10), insbesondere Halteelemente (26) angeordnet sind.

13. Anschlussdose nach einem der Ansprüche 1 bis 12, **dadurch gekennzeichnet, dass** die Abdeckung (6) einen Eingang (16) zum Anschliessen der Lichtwellenleiter aufweist, wobei der Eingang durch ein zwischen einer Schliesstellung und einer Offenstellung bewegbares und insbesondere schwenkbares Deckelteil (7) versperrbar ist.

14. Anschlussdose nach Anspruch 13, **dadurch gekennzeichnet, dass** am Deckelteil (7) und/oder auf der Oberseite der Montageplatte (1) ein elastisches Dichtelement (4,8) als Staubschutz, insbesondere ein Dichtelement aus Schaumstoff angebracht ist.

15. Anschlussdose nach einem der Ansprüche 1 bis 14, **dadurch gekennzeichnet, dass** die Abdeckung (6) in einer Draufsicht etwa rechteckig ausgebildet ist und dass der Eingang (16) in einem Eckbereich der Abdeckung angeordnet ist.
